Europäisches Patentamt

European Patent Office

Office européen des brevets

(11) Veröffentlichungsnummer: **0 370 177**
**A1**

(12) # EUROPÄISCHE PATENTANMELDUNG

(21) Anmeldenummer: **89115528.5**

(22) Anmeldetag: **23.08.89**

(51) Int. Cl.⁵: **C01B 31/10**

(30) Priorität: **12.10.88 DE 3834743**

(43) Veröffentlichungstag der Anmeldung:
**30.05.90 Patentblatt 90/22**

(84) Benannte Vertragsstaaten:
**AT BE CH DE ES FR GB GR IT LI LU NL SE**

(71) Anmelder: **Degussa Aktiengesellschaft**
**Weissfrauenstrasse 9**
**D-6000 Frankfurt am Main 1(DE)**

(72) Erfinder: **Karl, Alfons, Dr.**
**Herzbergstrasse 59**
**D-6466 Gründau 1(DE)**
Erfinder: **Von Kienle, Hartmut, Dr.**
**Am Hirschgraben 21**
**D-6056 Heusenstamm 2(DE)**

(54) **Verfahren zur Herstellung einer grobporigen Formkohle.**

(57) Verfahren zur Herstellung einer grobporigen Formkohle auf Basis von Holzkohlenstaub, Holzkohlenteer und Natronlauge durch Mischen, Kneten, Formgebung und Schwelung unter möglichst sauerstoffarmer Atmosphäre bei Temperaturen von 300 bis 900 °C und Aktivierung mit Wasserdampf und/oder Kohlendioxid bei Temperaturen von 700 bis 1200 °C, bei welchem man Natriumhydroxid in Mengen von 5,0 bis 15,0 Gew.-%, bezogen auf die Holzkohlenstaubmenge, zusetzt.

EP 0 370 177 A1

## Verfahren zur Herstellung einer grobporigen Formkohle

Die Erfindung betrifft ein Verfahren zur Herstellung einer grobporigen Formkohle auf Basis von Holzkohlenstaub, Holzkohlenteer und Natronlauge durch Mischen, Kneten, Formgebung und Schwelung unter möglichst sauerstoffarmer Atmosphäre bei Temperaturen von 300 bis 900 °C und Aktivierung mit Wasserdampf und/oder Kohlendioxid bei Temperaturen von 700 bis 1200 °C.

Formkohle wird als Adsorptionsmittel bei der Perkolationsentfärbung, z. B. bei der Methioninherstellung, zur Abtrennung von hochsiedenden Flüssigkeiten oder als Katalysatorträger eingesetzt.

Es ist bekannt, eine Formkohle für diese Anwendungszwecke einzusetzen, die auf Basis von Braunkohle hergestellt wurde.

Diese Rohstoffbasis hat den Nachteil, daß Schwankungen in der Qualität der Formkohle auftreten.

Gegenstand der Erfindung ist ein Verfahren zur Herstellung einer grobporigen Formkohle auf Basis von Holzkohlestaub, Holzkohlenteer und durch Mischen, Kneten, Formgebung und Schwelung unter möglichst sauerstoffarmer Atmosphäre bei Temperaturen von 300 bis 900 °C und Aktivierung mit Wasserdampf und/oder Kohlendioxid bei Temperaturen von 700 bis 1200 °C, welches dadurch gekennzeichnet ist, daß man Natriumhydroxid in Mengen von 5,0 bis 15,0 Gew.-%, bezogen auf die Holzkohlenstaubmenge, zusetzt.

In einer bevorzugten Ausführungsform kann das Natriumhydroxid in Form einer wäßrigen Lösung zugesetzt werden.

Die Konzentration dieser Natronlauge kann mindestens 25 Gew.-%, vorzugsweise 30 bis 50 Gew.-%, insbesondere 35 bis 50 Gew.-% betragen.

Die Schwelung kann bei einer Temperatur von 500 ± 100 °C durchgeführt werden.

Die Aktivierung kann bei einer Temperatur von 900 ± 100 °C durchgeführt werden.

Das erfindungsgemäße Verfahren kann in bekannten Misch-, Knet-, Formgebungs-, Schwel- und Aktivierungsvorrichtungen durchgeführt werden.

Das erfindungsgemäße Verfahren hat die Vorteile, daß man hohe Schwel- und Aktivierungsausbeuten sowie Produkte mit hohem Grobporenanteil erhält.

Beispiele

Misch-, Knet- und Formgebungsversuche

Die Komponenten Holzkohlenstaub, Holzkohlenteer und Natronlauge werden in einem Z-Kneter gemischt und geknetet, wobei die Natronlauge und die in der Tab. 2 angegebene Wassermenge vorgemischt werden. Die so erhaltene Mischung wird in der Strangpresse verformt.

Tabelle 1

| Misch-, Knet- und Preßbedingungen | |
|---|---|
| Mischungsreihenfolge:<br>Knetzeit :<br>Matrize : | Staub, Teer, Natronlauge/Wasser<br>15 min<br>Mehrlochmatrize mit 1,6 mm-Bohrungen |

Tabelle 2

| Mischungszusammensetzungen | | | | |
|---|---|---|---|---|
| | Beisp. 1 | Beisp. 2 | Beisp. 3 | Vergleichsbeisp. 4 |
| Holzkohlenstaub (g) | 1920 | 1920 | 1920 | 1920 |
| Holzkohlenteer (g) | 1140 | 1140 | 1140 | 1140 |
| 40 %ige Natronlauge (g) | 640 | 480 | 320 | 0 |
| Wasser (g) | 40 | 40 | 40 | 140 |
| NaOH-Gehalt* (G.-%) | 13.3 | 10.0 | 6.7 | 0 |

* bezogen auf die Holzkohlenstaubmenge

Schwelversuche

Die Schwelung der grünen Strangpreßlinge erfolgt im Drehrohr bei 500 °C unter nahezu sauerstofffreier Atmosphäre.

Tabelle 3

| Schwelbedingungen | |
|---|---|
| Drehrohr: | indirekt beheizt |
| beheizte Länge: | ca. 2.700 mm |
| Innendurchmesser: | ca. 380 mm |
| Rohrneigung: | ca. 2 ° |
| Umdrehungszahl: | ca. 7,5 U/min |
| Kohleneintrag: | ca. 5 kg/h |
| Trägergas: | ca. 1.150 Nl/h Stickstoff |
| Unterdruck: | ca. 20 mm Wassersäule |

Tabelle 4

| Schwelergebnisse | | |
|---|---|---|
| | Schwelausbeute* | Flücht.-Gehalt |
| Beispiel 1 | 74.5 G.-% | 17.6 G.-% |
| Beispiel 2 | 70.9 G.-% | 17.4 G.-% |
| Beispiel 3 | 67.4 G.-% | 10.2 G.-% |
| Vergleichsbeispiel 4 | 47.4 G.-% | 10.2 G.-% |

* bezogen auf das wasserfreie Grüngut

Aktivierungsversuche

Die Aktivierung der geschwelten Strangpreßlinge aus den Beispielen 1 - 4 erfolgte im Drehrohr bei einer Aktivierungstemperatur von 850 bzw. 950 °C.

3

Tabelle 5

| Aktivierungsbedingungen | |
|---|---|
| Drehrohr: | indirekt beheizt |
| beheizte Länge: | ca. 1000 mm |
| Innendurchmesser: | ca. 100 mm |
| Rohrgefälle: | ca. 1 % |
| Umdrehungszahl: | ca. 7,5 U/min |
| Stauhöhe: | ca. 15 mm |
| Wasserdampf: | 1000 g/h |
| Kohleneintrag: | 600 - 900 g/h |
| Unterdruck | ca. 10 mm Wassersäule |

Nach der Aktivierung wurden die Produkte gründlich mit Wasser gewaschen und getrocknet. Die Aktivierungsergebnisse sind in Tabelle 6 aufgeführt.

Tabelle 6

| | Akt.-Temp °C | Kohleneintrag g/h | Ofenausb. G-% | Benzolisotherme AS (G.-%) | | | | Jodzahl mg/g | Methylenblautiter ml/0.1 g | Melasse-mg-zahl mg | Stoßhärte G-% | Rollabrieb G-% | Rütteldichte g/l |
|---|---|---|---|---|---|---|---|---|---|---|---|---|---|
| | | | | 9/10 | 1/10 | 1/100 | 1/1000 | | | | | | |
| Beispiel 1 a | 850 | 600 | 42.3 | 70.9 | 36.1 | 24.7 | 16.2 | 1220 | 18.0 | 290 | 83.4 | 88.0 | 245 |
| Beispiel 1 b | 850 | 720 | 49.9 | 54.1 | 33.7 | 25.7 | 16.4 | 1170 | 16.5 | 565 | 88.0 | 90.8 | 280 |
| Beispiel 1 c | 950 | 900 | 39.1 | 57.3 | 40.4 | 26.5 | 16.4 | 1210 | 17.5 | 555 | 85.6 | 89.4 | 255 |
| Beispiel 2 | 850 | 600 | 48.6 | 60.5 | 35.4 | 25.6 | 17.3 | 1190 | 17.5 | 540 | 88.4 | 88.2 | 260 |
| Beispiel 3 | 850 | 600 | 48.1 | 55.5 | 33.9 | 25.4 | 17.7 | 1180 | 16.0 | 600 | 88.2 | 90.4 | 290 |
| Vergleichsbeispiel 4 | 850 | 600 | 65.0 | 29.0 | 19.7 | 16.6 | 12.5 | 700 | 3.5 | 1400 | 84.0 | 96.6 | 410 |

Die Aktivkohlen gemäß den Beispielen 1 a, 1 b und 1 c wurden nach Beispiel 1 gemischt, gepreßt und geschwelt. Die unterschiedlichen Kohlen wurden durch die unterschiedlichen Aktivierungsbedingungen wie Aktivierungstemperatur und ohleeintrag erzielt.

**Ansprüche**

1. Verfahren zur Herstellung einer grobporigen Formkohle auf Basis von Holzkohlenstaub, Holzkohlenteer und Natronlauge durch Mischen, Kneten, Formgebung und Schwelung unter möglichst sauerstoffarmer Atmosphäre bei Temperaturen von 300 bis 900 °C und Aktivierung mit Wasserdampf und/oder Kohlendioxid bei Temperaturen von 700 bis 1200 °C, dadurch gekennzeichnet, daß man Natriumhydroxid in Mengen von 5,0 bis 15,0 Gew.-%, bezogen auf die Holzkohlenstaubmenge, zusetzt.

2. Verfahren nach Anspruch 1, dadurch gekennzeichnet, daß man die Schwelung bei Temperaturen von 500 ± 100 °C durchführt.

3. Verfahren nach den Ansprüchen 1 bis 2, dadurch gekennzeichnet, daß man die Aktivierung bei Temperaturen von 900 ± 100 °C durchführt.

**Europäisches Patentamt**

# EUROPÄISCHER RECHERCHENBERICHT

Nummer der Anmeldung

EP 89 11 5528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A- 627 751 (CHEMISCHE WERKE CARBON GmbH) <br> * Zusammenfassung punkten 1,2a/e/f/g/l; Seite 4, Zeilen 14-35; Seite 1, Zeile 36; Seite 2, Zeile 34,63 * <br> --- | 1 | C 01 B 31/10 |
| A | FR-A-2 100 254 (DEUTSCHE GOLD- UND SILBER-SCHEIDEANSTALT VORMALS ROESSLER) <br> * Ansprüche 1,2,4; Beispiel 1 * <br> ----- | | |
| | | | **RECHERCHIERTE SACHGEBIETE (Int. Cl.5)** |
| | | | C 01 B 31/00 |

Der vorliegende Recherchenbericht wurde für alle Patentansprüche erstellt

| Recherchenort | Abschlußdatum der Recherche | Prüfer |
|---|---|---|
| DEN HAAG | 25-01-1990 | BREBION J.CH. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes Dokument

EPO FORM 1503 03.82 (P0403)